# EUROPÄISCHE PATENTSCHRIFT

(11) **EP 0 763 172 B1**
(45) Veröffentlichungstag und Bekanntmachung des Hinweises auf die Patenterteilung: **19.05.1999**
(21) Anmeldenummer: 96910002.3
(22) Anmeldetag: 21.03.1996
(51) Int. Cl.: B60K 20/04, F16H 61/36

(54) **Schaltvorrichtung für Getriebe von Kraftfahrzeugen**
Gearshift device for transmissions in motor vehicles
Dispositif de commande pour boîtes de vitesses de véhicules

(30) Priorität: 21.03.1995 DE 19509622
(43) Veröffentlichungstag der Anmeldung: 19.03.1997
(73) Patentinhaber: KÜSTER & Co. GmbH, 35630 Ehringshausen (DE)
(72) Erfinder: MORITZ, Reiner, D-35630 Ehringshausen (DE)
(74) Vertreter: Müller, Eckhard, Dr.
(86) Internationale Anmeldenummer: EP9601219
(87) Internationale Veröffentlichungsnummer: WO9629527

(56) Entgegenhaltungen:
- WO-A-94/00703
- FR-A- 1 066 356
- US-A- 4 189 952
- PATENT ABSTRACTS OF JAPAN vol. 008, no. 137 (P-282), 26.Juni 1984 & JP,A,59 036829 (CHIYUUOU HATSUJIYOU KK), 29.Februar 1984,

## Beschreibung

Die Erfindung betrifft eine Schaltvorrichtung für Getriebe von Kraftfahrzeugen mit einem Schalthebel, der wenigstens in einer Längsrichtung und einer Querrichtung betätigbar, beispielsweise auslenkbar oder um eine Lagerstelle des Gehäuses der Schaltvorrichtung schwenkbar oder kippbar angeordnet ist, wobei der Schalthebel mit wenigstens einem ersten Schaltzug sowie einem zweiten Schalt- oder Betätigungszug in Wirkverbindung steht, die Schaltzüge getriebeseitig an entsprechenden Stellgliedern angelenkt sind und wobei eine Betätigung des Schalthebels in Längs- und/oder Querrichtung eine Betätigung des ersten und/oder zweiten Schaltzuges und somit einen Schalt- und/oder Wählvorgang für die einzelnen Getriebestufen des Getriebes bewirkt.

Bei einer derartigen, beispielsweise aus der FR-A 1 066 356 bekannten, dem Oberbegriff des Anspruchs 1 entsprechenden, Schaltvorrichtung (Figur 8) sind zum Einlegen der Gänge an dem im Fahrzeuginnenraum angeordneten Schalthebel üblicherweise zwei Schaltzüge angelenkt, wobei bei einer Betätigung des Schalthebels über einen Betätigungszug der Schaltvorgang bewirkt und über den anderen Betätigungszug der Wählvorgang für die einzelnen Schaltstufen durchgeführt wird.

Desweiteren wurde bereits in der WO-A-94 00 703 beschrieben, anstelle von zwei separaten Betätigungszügen nur einen einzigen Betätigungszug einzusetzen, mit dem sowohl der Schalt- als auch der Wahlvorgang ausgeführt werden können. Derartige, nach der sogenannten Einseil-Technik aufgebaute Betätigungszüge weisen einen Innenzug sowie einen diesen Innenzug schlauchförmig umfassenden Zwischenzug auf, wobei der Innenzug wie auch der Zwischenzug in einem Außenschlauch angeordnet sind. Dabei sind der Innenzug an einer Kugelpfanne mit dem Schalthebel verbunden und der Zwischenzug über einen Hebel an dem Schalthebel angelenkt.

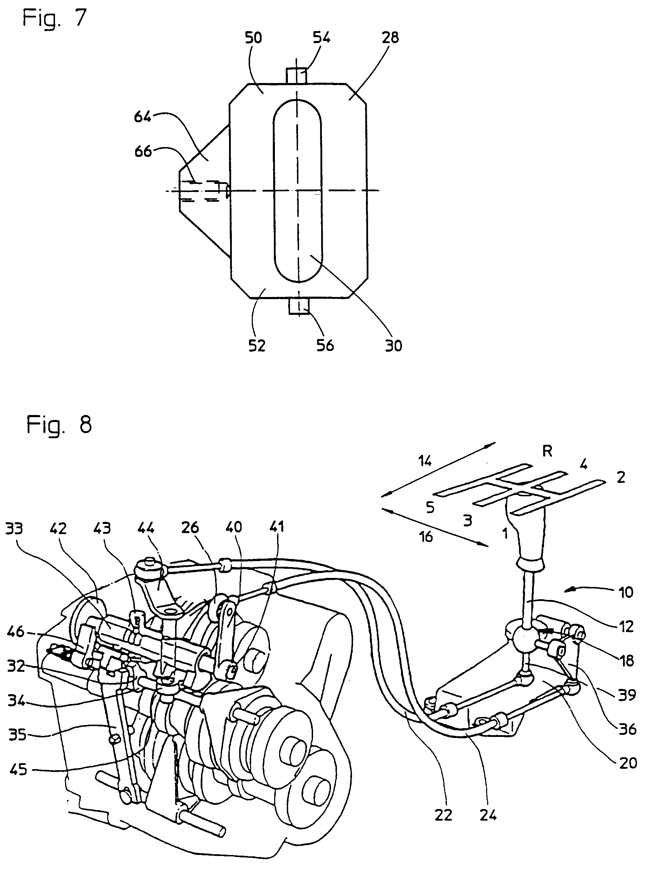

An den bekannten Ausführungsformen der Schaltvorrichtung erweist es sich als nachteilig, daß bei einer Auslenkung des Schalthebels in Querrichtung nicht nur einer der Schaltzüge eine Zug-/Schubbewegung ausführt, sondern auch der andere Schaltzug aufgrund der Mitbewegung mit dem in Querrichtung ausgelenkten Schalthebel eine Zug-/Schubbewegung ausführt beziehungsweise eine Querbewegung erfährt. Bei dem Ausführungsbeispiel des Standes der Technik gemäß Figur 8 besteht unter Umständen der Nachteil, daß bei einer Bewegung des Schalthebels in Querrichtung beide Schaltzüge in eine Zug/Schubbewegung versetzt werden können, wodurch der Wähl- und/oder Schaltvorgang der einzelnen Schaltstufen des Getriebes unter Umständen beeinträchtigt werden kann. Dieser Nachteil tritt grundsätzlich auch bei solchen nach der sogenannten Einseil-Technik aufgebauten Betätigungszügen auf. Darüber hinaus wird in diesem letztgenannten Fall zusätzlich bei einer Auslenkung des Schalthebels in Querrichtung auch der Innenzug in Querrichtung ausgelenkt. Hierdurch ergibt sich eine erhöhte Reibung mit einem dadurch bedingten, entsprechend hohen Verschleiß. Zwar kann diesem Nachteil der Querauslenkung des Innenzuges teilweise auch dadurch Rechnung getragen werden, daß das Führungsrohr beziehungsweise der Außenschlauch des Betätigungszuges in seinem Endabschnitt kegel- oder glockenförmig aufgeweitet ist. Allerdings ist diese Aufweitung des Außenschlauches beziehungsweise Führungsrohres aufwendig in der Herstellung.

Demgegenüber liegt der Erfindung die Aufgabe zugrunde, eine Schaltvorrichtung der eingangs genannten Art dahingehend zu verbessern, daß eine erhöhte Funktionssicherheit gegeben ist.

Diese Aufgabe wird bei der Schaltvorrichtung mit den eingangs genannten Merkmalen nach der Erfindung dadurch gelöst, daß zwischen einem Schaltzug und dem Schalthebel ein Verbindungsteil angeordnet ist, das in Längsrichtung verschiebbar im Gehäuse der Schaltvorrichtung geführt und ein im wesentlichen in Querrichtung positionierte, langlochartige Durchbrechung aufweist, in welche ein unteres Ende des Schalthebels eintaucht.

Hierdurch wird in vorteilhafter Weise dafür gesorgt, daß der Schalthebel bei einer Auslenkung in Querrichtung im wesentlichen frei in der langlochartigen Durchbrechung des Verbindungsteils verschwenkbar ist, und eine Querbewegung des Schaltzuges vermieden ist. Eine Auslenkung des Schalthebels in Längsrichtung bewirkt hingegen ein Verschieben des Verbindungsteils in dem Gehäuse der Schaltvorrichtung und somit eine Zug-/Schubbewegung des einen Schaltzuges. Ein Verschleiß aufgrund einer Auslenkung des einen Schaltzuges wie auch ein Ausknicken des Schaltzuges ist durch diese Maßnahme sicher vermieden.

Von Vorteil ist das Verbindungsteil gemäß einer Ausführungsform der Erfindung nach Art einer Platte im wesentlichen rechteckförmig ausgebildet, wobei an einander gegenüberliegenden Seitenrändern in Querrichtung weisende Zapfen, Bolzen angeformt beziehungsweise angeordnet sind, die in Wänden des Gehäuses angeordneten Führungen, wie in Längsrichtung weisende Schlitze, Nuten, geführt sind. Durch diese Maßnahme wird eine konstruktiv einfache Führung des Verbindungsteils in dem Gehäuse zur Verschiebung des Verbindungsteils in Längsrichtung angegeben. Eine Verschwenkung oder Auslenkung des Schalthebels in Längsrichtung wird somit sicher und reibungsarm auf den einen Schaltzug übertragen.

Dabei weist nach einer anderen, vorteilhaften Ausführungsform der Erfindung ein Querrand des Verbindungsteils eine Aufnahme zur Anlenkung oder Fixierung des einen Schaltzuges auf. Das Ende des Schaltzuges kann dabei durch Klemmen oder dergleichen Befestigungsmittel in der Aufnahme festgelegt sein.

Gemäß einem weiteren vorteilhaften Merkmal eines Ausführungsbeispiels der Erfindung ist an einem unteren Ende des Schalthebels eine Kugel ausgebildet, welche in die Durchbrechung eintaucht. Eine Auslenkung des Schalthebels in Längsrichtung wird somit reibungsarm auf das Verbindungsteil übertragen, um dies in Längsrichtung vor- beziehungsweise zurückzubewegen.

Dabei ist das Verbindungsteil nach einer besonderen Ausführungsform der Erfindung zwischen dem ersten Schaltzug und dem Schalthebel angeordnet. Der erste Schaltzug überträgt somit die Bewegungen des Schalthebels in Längsrichtung, der zweite Schaltzug die Bewegungen des Schalthebels in Querrichtung auf die Stellglieder des Getriebes.

Nach einer besonders vorteilhaften Weiterbildung der Erfindung ist zwischen dem zweiten Schaltzug und dem Schalthebel ein am Gehäuse angelenkter Kniehebel angeordnet, der an seinem freien Ende ein gelenkig fixiertes Verbindungsstück aufweist, welches mit dem zweiten Schaltzug verbunden ist. Durch diese Maßnahme wird eine Auslenkung des Schalthebels in Querrichtung sicher und reibungsarm in eine Zug-/Schubbewegung des zweiten Schaltzuges umgesetzt.

Von besonderem Vorteil ist die Erfindung bei in der sogenannten Einseil-Technik aufgebauten Betätigungszügen einsetzbar. Dann sind der erste Schaltzug beziehungsweise der zweite Schaltzug als Innenzug beziehungsweise Zwischenzug ausgebildet und gemeinsam in einem Außenschlauch aufgenommen. In diesem Fall werden die bei herkömmlichen Schaltvorrichtungen nicht zu vermeidenden Querauslenkungen, beispielsweise des Innenzuges, infolge einer Auslenkung des Schalthebels in Querrichtung vermieden.

Der Zwischenzug ist bei gemäß der Einseil-Technik aufgebauten Betätigungszügen insbesondere als längsverseilter Schlauch ausgebildet, wodurch die Zug-/Schubbewegungen sicher auf die Stellglieder des Getriebes übertragbar sind.

Weitere Vorteile und Anwendungsmöglichkeiten der vorliegenden Erfindung ergeben sich aus der nachfolgenden Beschreibung eines Ausführungsbeispieles anhand der Zeichnung.

Es zeigen:
- Figur 1: in Seiten- und Vorderansicht ein Ausführungsbeispiel der erfindungsgemäßen Vorrichtung in schematischer Darstellung mit dem Schalthebel in Längsrichtung zurück, erster Schaltzug vor,
- Figur 2: die Vorrichtung der Figur 1 mit dem Schalthebel in Längsrichtung 0, erster Schaltzug neutral,
- Figur 3: die Vorrichtung der Figur 1 mit dem Schalthebel in Längsrichtung vor, erster Schaltzug zurück,
- Figur 4: die Vorrichtung der Figur 1 mit dem Schalthebel in Querrichtung links, zweiter Schaltzug vor,
- Figur 5: die Vorrichtung der Figur 1 mit dem Schalthebel in Querrichtung 0, zweiter Schaltzug neutral,
- Figur 6: die Vorrichtung der Figur 1 mit dem Schalthebel in Querrichtung rechts, zweiter Schaltzug zurück,
- Figur 7: eine Draufsicht auf das Verbindungsteil und
- Figur 8: eine Darstellung eines Ausführungsbeispiels einer Schaltvorrichtung nach dem Stand der Technik.

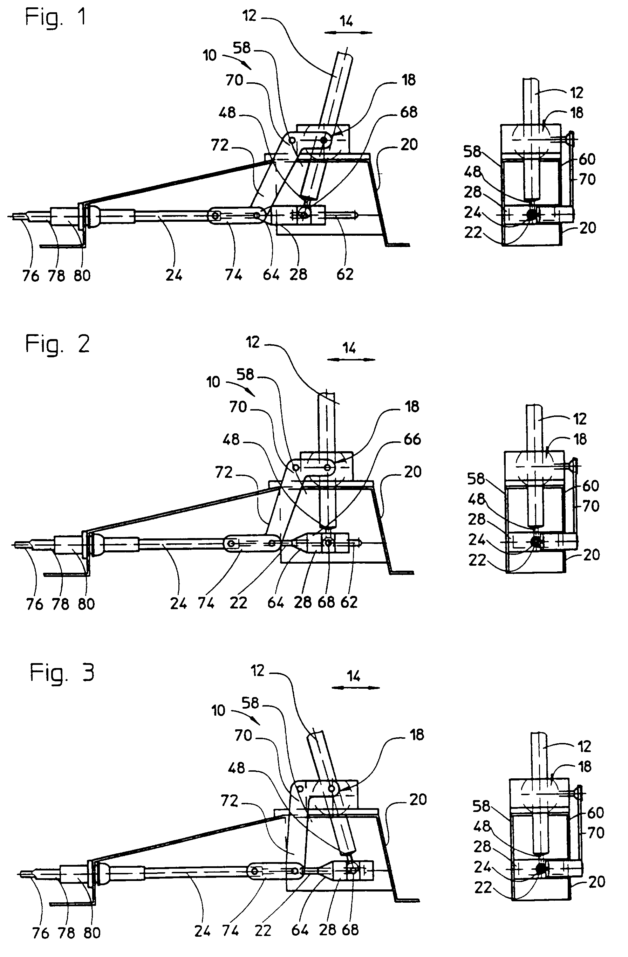

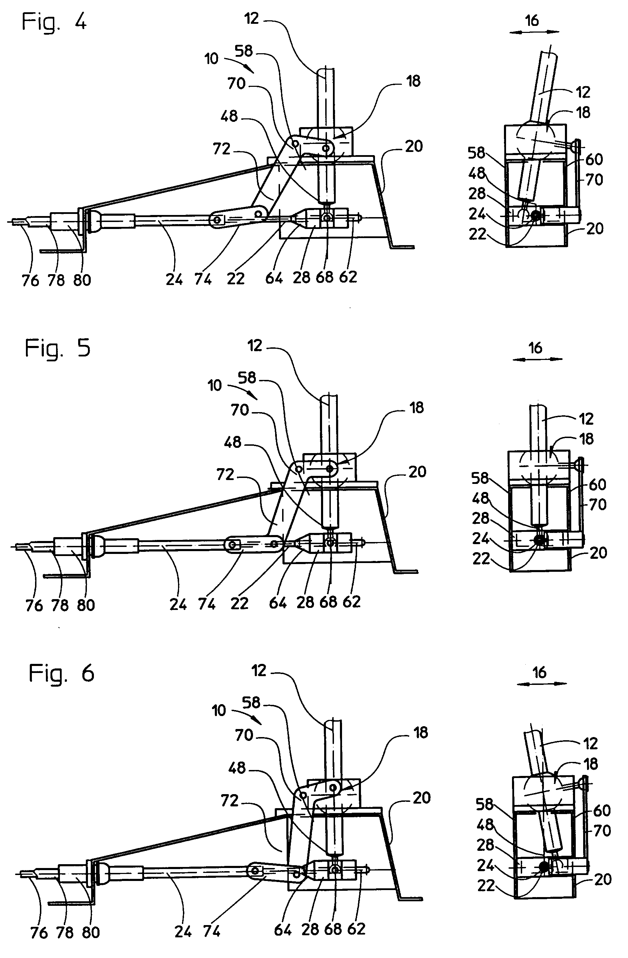

In den Figuren 1 bis 7 sind eine Schaltvorrichtung 10 beziehungsweise ein Verbindungsteil 28 eines Ausführungsbeispiels der Erfindung dargestellt. Die Schaltvorrichtung 10 dient zum Schalten von Getrieben für Kraftfahrzeuge und weist einen Schalthebel 12 auf, der in einer Längsrichtung 14 sowie einer Querrichtung 16 auslenkbar ist. Der Schalthebel 12 ist dabei um eine Lagerstelle 18 des Gehäuses 20 der Schaltvorrichtung 10 schwenkbar angeordnet. Weiterhin steht der Schalthebel 12 mit einem ersten Schaltzug 22 sowie einem zweiten Schaltzug 24 in Wirkverbindung. Die Schaltzüge 22, 24 sind getriebeseitig an entsprechenden Stellgliedern 40, 44, insbesondere einem Umlenkhebel oder einem Hebel, angelenkt. Eine Betätigung des Schalthebels 12 in Längs- oder oder Querrichtung 14, 16 wird in eine Zug-/Schubbewegung des ersten oder zweiten Schaltzuges 22, 24 und somit in einen Schalt- oder Wählvorgang für die einzelnen Getriebestufen des Getriebes umgesetzt.

Zwischen dem ersten Schaltzug 22 und dem Schalthebel 12 ist ein Verbindungsteil 28 angeordnet, das in Längsrichtung 14 verschiebbar im Gehäuse 20 der Schaltvorrichtung 10 geführt ist. Das Verbindungsteil 28 besitzt eine im wesentlichen in Querrichtung 16 positionierte, langlochartige Durchbrechung 30, in die ein unteres Ende 48 des Schalthebels 12 eintaucht.

Das Verbindungsteil 28 ist nach Art einer Platte im wesentlichen rechteckförmig ausgebildet, wobei an einander gegenüberliegenden Längsseitenrändern 50, 52 in Querrichtung 16 weisende Zapfen 54, 56, Bolzen angeformt oder befestigt sind. Diese Zapfen 54, 56 sind in Wänden 58, 60 des Gehäuses 20 angeordneten Führungen 62, zum Beispiel in in Längsrichtung weisenden Schlitzen oder Nuten geführt.

Eine Querwand 64 des Verbindungsteils 28 weist eine Aufnahme 66 zur Anlenkung oder Fixierung des ersten Schaltzuges 22 auf. Am unteren Fortsatz des Schalthebels 12 ist eine Kurbel 68 ausgebildet, welche in die langlochartige Durchbrechung 30 des Verbindungsteils 28 eintaucht.

Zwischen dem zweiten Schaltzug 24 und dem Schalthebel 12 ist ein am Gehäuse 20 angelenkter Kniehebel 70 angeordnet, der an einem freien Ende 72 ein gelenkig fixiertes Verbindungsstück 74 aufweist. Dieses Verbindungsstück 74 ist mit dem zweiten Schaltzug 24 verbunden.

Von besonderem Vorteil sind der erste Schaltzug 22 beziehungsweise der zweite Schaltzug 24 als Innenzug 76 beziehungsweise den Innenzug 76 schlauchförmig umfassenden Zwischenzug 78 ausgebildet. Weiterhin sind der Innenzug 76 und Zwischenzug 78 in einem Außenschlauch 80 des Betätigungszuges aufgenommen. Der Zwischenzug 78 ist als längsverseilter Schlauch ausgestaltet. Derartige Betätigungszüge werden auch als auch Einseil-Betätigungszüge bezeichnet.

Die bekannte Schaltvorrichtung 10 nach Figur 8 umfaßt einen Schaltbock, einen Schalthebel 12 sowie zwei Schaltzüge 22, 24, die getriebeseitig an entsprechenden Stellgliedern beziehungsweise Hebeln 40, 44 angeschlossen sind.

Wenn der Schalthebel 12 in Querrichtung 16 geführt wird, setzt ein äußerer Hebel 36 am Schaltbock diese Bewegung in eine Zug-/Schubbewegung des Schaltzuges 24 um. Bei Führung des Schalthebels 12 in Längsrichtung 14 wird dagegen der Schaltzug 22 direkt kraftschlüssig vom unteren Fortsatz 39 des Schalthebels 12 betätigt.

Der Umlenkhebel 40 für seitliche Schalthebelführung betätigt eine Schaltwelle 41 mit einer federbelasteten Schaltkulisse 42 am entgegengesetzten Ende, die bei neutral geschaltetem

Getriebe bestrebt ist, die Stellung für den dritten/vierten Gang einzunehmen. Eine federbelastete Sperrkugel 43 in einer Radialnut der Schaltwelle sorgt dafür, daß ein eingelegter Gang nicht selbsttätig herausspringt.

Der Hebel 44 für die längsachsige Schalthebelführung schließt an eine senkrecht stehende Welle an, auf der am entgegengesetzten Ende ein Gangwählhebel 45 gelagert ist, der seinerseits einen die Schaltwelle umschließenden Gangwähler 33 betätigt. Der Gangwähler 33 geht hinter der Schaltkulisse in einen Schaltfinger 32 über, der - je nach Gangwahl - Schaltkabel 26, Mitnehmer 34 oder Schwinghebel 35 betätigt.

Diese verschieben wiederum ihre fest angebrachten Schaltkabel und somit die Schaltmuffen zu den Vorgelegerädern. Wird der Schalthebel seitwärts bewegt, dann dreht die Schaltkulisse 42 den Schaltfinger 32 in die richtige Gangstellung. Wird der Schalthebel in Längsrichtung verschoben, dann verdreht zunächst der Gangwählhebel 45 den Gangwähler 33, dessen Schaltfingerfortsatz 32 die Schaltkabel verschiebt.

Hinter der Schaltkulisse befindet sich eine federbelastete Rückwärtsgangsperre 46, die ein versehentliches Schalten aus dem fünften Gang in den Rückwärtsgang verhindert. Die federbelastete Sperrklinke der Rückwärtsgangsperre 46 befindet sich normalerweise auf Anschlag an einem Nocken der Schaltkulisse 42. Wird der Schalthebel seitwärts dem fünften Gang zugeführt, dann verdreht sich die Schaltkulisse 42, so daß die Sperrklinke nicht mehr am Nocken aufliegt, sondern auf den zylindrischen Gangwähler 33 hinüber gleitet.

Beim Einlegen des fünften Ganges wird der Gangwähler 33 axial verschoben, die Sperrklinke gleitet in eine Aussparung und drückt dann auf die Schaltwelle 41, wodurch eine direkte Verschiebung des Gangwählers 33 aus dem fünften Gang in den Rückwärtsgang unmöglich gemacht wird.

Um den Rückwärtsgang einlegen zu können, muß der Schalthebel zunächst in Neutralstellung gebracht werden, wo der Nocken an der Schaltkulisse 42 die Sperrklinke für den Rückwärtsgang aushebt. Erst danach wird es möglich, den Gangwähler 33 in die Seitenlage für den Rückwärtsgang zu verdrehen.

Mit dieser Konstruktionslösung braucht bei der Schaltung keine besondere Sperrvorrichtung für den Rückwärtsgang vorgesehen werden. Die Vorgänge zum Einlegen der Gänge werden beispielhaft anhand des Einlegens des ersten Ganges beschrieben: Indem der Schalthebel 12 seitwärts in die Lage der Gänge 1-2 geführt wird, wird der Schaltzug 24 über den Seitenhebel 36 des Schalthebels 12 mit Zug beansprucht, was ein Verdrehen der Schaltwelle 41 sowie der Schaltkulisse 42 zur Folge hat. Gleichzeitig wird auch der Gangwähler 33 mitgedreht, so daß der Schaltfinger 32 mittig vor der Schaltschwinge für die Gänge 1-2 zu stehen kommt. Zudem blockiert die Schaltkulisse 42 gleichzeitig die Schaltkabel für den fünften Gang/Rückwärtsgang und die Gänge 3-4, wodurch ein versehentliches, gleichzeitiges Einlegen mehrerer Gänge vermieden wird.

Wird mit dem Schalthebel 12 der erste Gang eingelegt, dann übt die längsachsige Bewegung vorwärts eine Zugbeanspruchung auf das Schaltkabel 22 aus, das den Hebel 44 für längsachsige Schaltführung verdreht. Der Gangwählhebel 45 zwingt daraufhin den Gangwähler 33 und in dessen Verlängerung den Schaltfinger 32 zu einer seitlichen Bewegung, in deren Richtung die Schaltschwinge der Gänge 1/2 mitgerissen wird. Die zentrisch drehbar gelagerte Schaltschwinge verschiebt dann die Schaltgabel in entgegengesetzter Richtung und bringt die Schaltmuffe mit dem ersten Vorlegerad in Eingriff.

Das Einlegen der übrigen Gänge geschieht in ähnlicher Weise, indem die Schaltkulisse 42 zunächst den Schaltfinger in die richtige Lage bringt, worauf der Gangwähler 33 die Schaltgabel entweder direkt (fünfter Gang/Rückwärtsgang) oder mit Beteiligung anderer Schaltglieder (übrige Gänge) seitwärts verschiebt.

### Bezugszeichenliste

- 10 -: Schaltvorrichtung
- 12 -: Schalthebel
- 14 -: Längsrichtung
- 16 -: Querrichtung
- 18 -: Lagerstelle
- 20 -: Gehäuse
- 22 -: erster Schaltzug
- 24 -: zweiter Schaltzug
- 26 -: Schaltgabel
- 28 -: Verbindungsteil
- 30 -: Durchbrechung
- 32 -: Schaltfinger
- 33 -: Gangwähler
- 34 -: Mitnehmer
- 35 -: Schwinghebel
- 36 -: Hebel
- 39 -: Fortsatz
- 40 -: Stellglied, Umlenkhebel
- 41 -: Schaltwelle
- 42 -: Schaltkulisse
- 43 -: Sperrkugel
- 44 -: Stellglied, Hebel
- 45 -: Gangwählhebel
- 46 -: Rückwärtsgangsperre, Sperrklinke
- 48 -: unteres Ende
- 50 -: Seitenrand
- 52 -: Seitenrand
- 54 -: Zapfen
- 56 -: Zapfen
- 58 -: Wand
- 60 -: Wand
- 62 -: Führung
- 64 -: Querrand
- 66 -: Aufnahme
- 68 -: Kugel
- 70 -: Kniehebel
- 72 -: freies Ende
- 74 -: Verbindungsstück
- 76 -: Innenzug
- 78 -: Zwischenzug
- 80 -: Außenschlauch

## Patentansprüche

1. Schaltvorrichtung (10) für Getriebe von Kraftfahrzeugen mit einem Schalthebel (12), der wenigstens in einer Längsrichtung (14) und einer Querrichtung (16) betätigbar, beispielsweise auslenkbar oder um eine Lagerstelle (18) des Gehäuses (20) der Schaltvorrichtung (10) schwenkbar oder kippbar angeordnet ist, wobei der Schalthebel (12) mit wenigstens einem ersten Schaltzug (22) sowie einem zweiten Schalt- (24) oder Betätigungszug in Wirkverbindung steht, die Schaltzüge (22, 24) getriebeseitig an entsprechenden Stellgliedern (40, 44) angelenkt sind und wobei eine Betätigung des Schalthebels (12) in Längs- und/oder Querrichtung (14, 16) eine Betätigung des ersten und/oder zweiten Schaltzuges (22, 24) und somit einen Schalt- und/oder Wählvorgang für die einzelnen Getriebestufen des Getriebes bewirkt, dadurch gekennzeichnet, daß zwischen einem Schaltzug (22, 24) und dem Schalthebel (12) ein Verbindungsteil (28) angeordnet ist, das in Längsrichtung (14) verschiebbar im Gehäuse (20) der Schaltvorrichtung (10) geführt ist und eine im wesentlichen in Querrichtung (16) positionierte, langlochartige Durchbrechung (30) aufweist, in welche ein unteres Ende (48) des Schalthebels (12) eintaucht.

2. Schaltvorrichtung nach Anspruch 1, dadurch gekennzeichnet, daß das Verbindungsteil (28) nach Art einer Platte im wesentlichen rechteckförmig ausgebildet ist, wobei an einander gegenüberliegenden Seitenrändern (50, 52) in Querrichtung (16) weisende Zapfen (54, 56), Bolzen angeformt beziehungsweise angebracht sind, die in Wänden (58, 60) des Gehäuses (20) angeordneten Führungen (62), wie in Längsrichtung (14) weisende Schlitze, Nuten, geführt sind.

3. Schaltvorrichtung nach einem der vorhergehenden Ansprüche, dadurch gekennzeichnet, daß ein Querrand (64) des Verbindungsteils (28) eine Aufnahme (66) zur Anlenkung oder Fixierung eines Schaltzuges (22, 24) aufweist.

4. Schaltvorrichtung nach einem der vorhergehenden Ansprüche, dadurch gekennzeichnet, daß am unteren Ende des Schalthebels (12) eine Kugel (68) ausgebildet ist, welche in die Durchbrechung (30) eintaucht.

5. Schaltvorrichtung nach einem der vorhergehenden Ansprüche, dadurch gekennzeichnet, daß zwischen dem ersten Schaltzug (22) und dem Schalthebel (12) das Verbindungsstück (28) angeordnet ist.

6. Schaltvorrichtung nach Anspruch 5, dadurch gekennzeichnet, daß zwischen dem zweiten Schaltzug (24) und dem Schalthebel (12) ein am Gehäuse (20) angelenkter Kniehebel (70) angeordnet ist, der an seinem freien Ende (72) ein gelenkig fixiertes Verbindungsstück (74) aufweist, welches mit dem zweiten Schaltzug (24) verbunden ist.

7. Schaltvorrichtung nach einem der vorhergehenden Ansprüche, dadurch gekennzeichnet, daß der erste Schaltzug (22) beziehungsweise der zweite Schaltzug (24) als Innenzug (76) beziehungsweise Zwischenzug (78) ausgebildet und gemeinsam in einem Außenschlauch (80) aufgenommen sind.

8. Schaltvorrichtung nach Anspruch 7, dadurch gekennzeichnet, daß Zwischenzug (78) als beispielsweise längsverseilter Schlauch ausgebildet ist.

## Claims

1. Gearshift device (10) for transmissions of motor vehicles, with a gearshift lever (12) which is actuable at least in a longitudinal direction (14) and a transverse direction (16), for example is arranged to be deflectable or pivotable or tiltable about a bearing point (18) of the housing (20) of the gearshift device (10), wherein the gearshift lever (12) stands in operative connection with at least a first gearshifting pull member (22) as well as a second gearshifting (24) or actuating pull member, the gearshifting members (22, 24) are articulated at the transmission side to corresponding adjusting elements (40, 44) and wherein an actuation of the gearshift lever (12) in longitudinal and/or transverse direction (14, 16) effects an actuation of the first and/or second gearshifting pull member (22, 24) and thus a gearshifting and/or selecting process for the individual gear stages of the transmission, characterised in that arranged between a gearshifting pull member (22, 24) and the gearshift lever (12) is a connecting member (28) which is guided in longitudinal direction (14) to be displaceable in the housing (20) of the gearshift device (10) and has a slot-like through passage (30), which is positioned substantially in transverse direction (16) and into which a lower end (48) of the gearshift lever (12) extends.

2. Gearshift device according to claim 1, characterised in that the connecting member (28) is constructed in the manner of a plate of substantially rectangular shape, wherein spigots (54, 56) or pins, which point in transverse direction (16), are formed on or mounted at mutually opposite side edges (50, 52) and are guided in guides (62), such as slots or grooves pointing in longitudinal direction (14), arranged in walls (56, 60) of the housing (20).

3. Gearshift device according to one of the preceding claims, characterised in that a transverse edge (64) of the connecting member (28) has a receptacle (66) for articulation or fixing a gearshifting pull member (22, 24).

4. Gearshift device according to one of the preceding claims, characterised in that a ball (68), which extends into the through passage (30), is formed at the lower end of the gearshift lever (12).

5. Gearshift device according to one of the preceding claims, characterised in that the connecting member (28) is arranged between the first gearshifting pull member (22) and the gearshift lever (12).

6. Gearshift device according to claim 5, characterised in that arranged between the second gearshifting member (24) and the gearshift lever (12) is a bellcrank lever (70) which has pivotably fixed connecting member (74), which is connected with the second gearshifting pull member (24), at its free end (72).

7. Gearshift device according to one of the preceding claims, characterised in that the first gearshifting pull member (22) and the second gearshifting pull member (24) are constructed as an inner pull member (76) and an intermediate pull member (78), respectively, and are received in common in an outer hose (80).

8. Gearshift lever according to claim 7, characterised in that the intermediate pull member (78) is constructed as, for example, a longitudinally stranded hose.

## Revendications

1. Dispositif de commande (10) pour boîte de vitesses de véhicules présentant un levier de vitesse (12), qui peut être actionné au moins dans une direction longitudinale (14) et dans une direction transversale (16), par exemple disposé de façon à pouvoir s'écarter ou de façon à pouvoir pivoter ou basculer autour d'une position de repos (18) du boîtier (20) du dispositif de commande (10), dans lequel le levier de vitesse (12) est relié par action coordonnée à au moins un premier câble de commande (22) ainsi qu' à un second câble de commande (24) ou un câble d'actionnement, les câbles de commande (22, 24) étant reliés par articulation côté boîte de vitesses à des éléments de réglage (40, 44) correspondants, et dans lequel un actionnement du levier de vitesse (12) dans la direction longitudinale et / ou transversale (14, 16) entraîne un actionnement du premier et / ou du second câble(s) de commande (22, 24) et ainsi un processus de changement de vitesses et / ou de sélection des différents rapports de transmission, caractérisé en ce qu'entre un câble de commande (22, 24) et le lever de vitesse (12) est disposé un élément de raccord (28), qui est dirigé dans le boîtier (20) du dispositif de commande (10) de façon à pouvoir se déplacer dans la direction longitudinale (14) et présente une découpe (30) en forme de trou allongé placée dans une direction essentiellement transversale (16) et dans laquelle s'insère une extrémité inférieure (48) du lever de vitesse (12).

2. Dispositif de commande selon la revendication 1, caractérisé en ce que l'élément de raccord (28) est conçu sous la forme d'une plaque de forme essentiellement rectangulaire, dans laquelle des tourillons (54, 56) orientés dans la direction transversale (16) sont formés en cheville ou fixés au niveau des bords latéraux opposés (50, 52), ces tourillons étant guidés dans des glissières (62) disposées dans des parois (58, 60) du boîtier (20), comme dans des fentes, rainures orientées dans une direction longitudinale (14).

3. Dispositif de commande selon l'une des revendications précédentes, caractérisé en ce que qu'un bord transversal (64) de l'élément de raccord (28) présente un logement (66) permettant de relier par articulation ou de fixer un câble de commande (22, 24).

4. Dispositif de commande selon l'une des revendications précédentes, caractérisé en ce que, au niveau de l'extrémité inférieure du levier de vitesse (12) est formée une rotule (68), laquelle s'insère dans la découpe (30).

5. Dispositif de commande selon l'une des revendications précédentes, caractérisé en ce que la pièce de raccord (28) est disposée entre le premier câble de commande (22) et le lever de vitesse (12).

6. Dispositif de commande selon la revendication 5, caractérisé en ce qu'est disposé un levier à genouillère (70) fixé par articulation au boîtier (20) entre le second câble de commande (24) et le levier de vitesse (12), ledit levier à genouillère présentant à son extrémité libre (72) une pièce de raccord (74) fixée par articulation, laquelle est reliée au second câble de commande (24).

7. Dispositif de commande selon l'une des revendications précédentes, caractérisé en ce que le premier câble de commande (22) ou le second câble de commande (24) sont respectivement conçus en tant que câble interne (76) et câble intermédiaire (78), et sont logés conjointement dans une conduite externe (80).

8. Dispositif de commande selon la revendication 7, caractérisé en ce que le câble intermédiaire (78) est conçu en tant que conduite par exemple à câblage longitudinal.
